# EUROPEAN PATENT APPLICATION

(11) **EP 4 406 817 A1**
(43) Date of publication of application: **31.07.2024**
(21) Application number: 23766163.2
(22) Date of filing: 13.03.2023
(51) Int. Cl.: B62D 33/04, C22F 1/04

(54) **ALUMINUM ALLOY CARGO COMPARTMENT PLATE, PREPARATION METHOD, CARGO COMPARTMENT, VARIABLE-CROSS-SECTION CARRIAGE, AND TRUCK**

(30) Priority: 11.03.2022 CN 202220538775 U; 11.03.2022 CN 202210242897; 25.08.2022 CN 202211030393; 25.08.2022 CN 202222286143 U
(71) Applicant: Zhejiang Geely Holding Group Co., Ltd., Hangzhou, Zhejiang 310000 (CN); Zhejiang Geely Farizon New Energy Commercial Vehicle Group Co., Ltd., Hangzhou, Zhejiang 310000 (CN)
(72) Inventor: LI, Shufu, Hangzhou, Zhejiang 310000 (CN); FAN, Xianjun, Hangzhou, Zhejiang 310000 (CN); GAO, Ming, Hangzhou, Zhejiang 310000 (CN); CHAI, Guomin, Hangzhou, Zhejiang 310000 (CN); DONG, Guochao, Hangzhou, Zhejiang 310000 (CN); LV, Lingfang, Hangzhou, Zhejiang 310000 (CN); HUANG, Yanling, Hangzhou, Zhejiang 310000 (CN); WANG, Bizheng, Hangzhou, Zhejiang 310000 (CN)
(74) Representative: Osterhoff, Utz
(86) International application number: PCT/CN2023/081184
(87) International publication number: WO 2023/169586

(57) **Abstract**

An aluminum alloy cargo compartment plate (10A), configured to enclose and form a cargo compartment, and a thickness of the aluminum alloy cargo compartment plate is configured to change gradually and form a variable cross-section structure in an up and down direction of the cargo compartment. By designing the aluminum alloy cargo compartment plate to be gradually changed in the up and down direction, so that when the aluminum alloy cargo compartment plate is used to enclose and form the cargo compartment, the thickness of each position of the aluminum alloy cargo compartment side panel can be provided correspondingly according to the stress situation of the cargo compartment in the actual usage process. And a preparation method of the aluminum alloy cargo compartment plate, a cargo compartment, a carriage and a truck.

## Description

### CROSS-REFERENCE TO RELATED APPLICATIONS

This application claims priority to Chinese Patent Application No. 202210242897.3, filed on March 11, 2022, Chinese Patent Application No. 202220538775.4, filed on March 11, 2022, Chinese Patent Application No. 202222286143.6, filed on August 25, 2022, and Chinese Patent Application No. 202211030393.1, filed on August 25, 2022. The disclosures of the above-mentioned applications are incorporated herein by reference in their entireties.

### TECHNICAL FIELD

The present application relates to the technical field of truck, especially to the technical field of cargo compartment side panel of truck. Specifically, the present application relates to an aluminum alloy cargo compartment plate, a preparation method of the aluminum alloy cargo compartment plate, a cargo compartment, a variable cross-section carriage and a truck.

### BACKGROUND

Aluminum alloy has the advantages of low density, high specific strength, good corrosion resistance and high recycling value, and it is an important material carrier for achieving automobile lightweight. However, shortcomings of aluminum alloy such as the high cost and low hardness value are delaying the process of replacing steel with aluminum in the automotive industry. At present, the market share of iron cargo compartments is very high, while the market share of aluminum cargo compartments is very small. On the premise of not affecting usage performance, further reducing the weight of aluminum cargo compartments to narrow the price gap between aluminum cargo compartments and iron cargo compartments is the key to increasing the market share of aluminum cargo compartments and promoting the process of replacing steel with aluminum.

Aluminum alloy has the advantages of low density, high specific strength, good corrosion resistance and high recycling value, and it is an important material carrier for achieving automobile lightweight. However, shortcomings of aluminum alloy such as the high cost and low hardness value are delaying the process of replacing steel with aluminum in the automotive industry. At present, the market share of iron cargo compartments is very high, while the market share of aluminum cargo compartments is very small. On the premise of not affecting usage performance, further reducing the weight of aluminum cargo compartments to narrow the price gap between aluminum cargo compartments and iron cargo compartments is the key to increasing the market share of aluminum cargo compartments and promoting the process of replacing steel with aluminum.

Rolled unequal thickness plate refers to a plate whose thickness changes along the rolling direction, and it is called unequal thickness plate for short. Compared with the equal thickness plate, using unequal thickness plates to assemble a carriage, for example, carriage of truck, can reduce the weight of the carriage, thus achieving the lightweight of the aluminum cargo compartment. However, aluminum unequal thickness plates often have problems such as obvious rolling indentations during the rolling process, which are difficult to cover up with coating, thus seriously affecting the apparent quality of aluminum unequal thickness plates, and it is difficult to ensure that the appearance of aluminum unequal thickness plates meet relevant requirements.

### SUMMARY

The main purpose of the present application is to propose an aluminum alloy cargo compartment plate and a preparation method of the aluminum alloy cargo compartment plate, an aluminum alloy cargo compartment and a truck, which aim to achieve the lightweight of the aluminum cargo compartment and improve the apparent quality of the aluminum unequal thickness plate.

In order to achieve the above purpose, the present application proposes an aluminum alloy cargo compartment plate, the aluminum alloy cargo compartment plate is configured to enclose and form a cargo compartment, and a thickness of the aluminum alloy cargo compartment plate is configured to change gradually and form a variable cross-section structure in an up and down direction of the cargo compartment.

In an embodiment, the aluminum alloy cargo compartment plate is made of an aluminum alloy equal thickness plate as raw materials, and is rolled into an aluminum alloy variable-thickness plate by adopting a round roller with variable gap in one pass.

In an embodiment, the aluminum alloy cargo compartment plate is pressed into a corrugated structure.

In an embodiment, a single corrugation in the corrugated structure is configured to extend along an up and down direction.

In an embodiment, the thickness of the aluminum alloy cargo compartment plate is configured to decrease gradually in a direction from lower to upper of the cargo compartment.

In an embodiment, the aluminum alloy cargo compartment plate is provided with at least one transition zone extending along an up and down direction, and a thickness of the aluminum alloy cargo compartment plate in the transition zone is configured to change continuously.

In an embodiment, the transition zone includes a linear transition zone with a linear change in thickness and/or a curvilinear transition zone with a non-linear change in thickness.

In an embodiment, the aluminum alloy cargo compartment plate is further provided with at least one equal thickness zone extending along the up and down direction, the equal thickness zone is adjacent to the transition zone, and a thickness of a connection between the equal thickness zone and the transition zone is consistent.

In an embodiment, the aluminum alloy cargo compartment plate is provided with a plurality of the transition zones and a plurality of the equal thickness zones, and the plurality of transition zones and the plurality of equal thickness zones are provided alternately.

In an embodiment, a maximum thickness of the aluminum alloy cargo compartment plate is E1, a minimum thickness of the aluminum alloy cargo compartment plate is E2, and E1/E2≤3.

In an embodiment, an aluminum alloy plate is provided with at least one transition zone in a rolling direction, and the thickness of the transition zone is configured to change continuously along the rolling direction; wherein the transition zone is provided with a first end and a second end provided opposite to the first end in the rolling direction, a thickness of the transition zone at the first end is A1, a thickness of the transition zone at the second end is A2, a length of the transition zone along the rolling direction is D, a difference between A1 and A2 is defined as A3, and D≥100*A3.

The present application further proposes a lightweight variable cross-section carriage, the carriage is provided with at least a bottom panel and two side panels, the two side panels are respectively provided on a left side of the bottom panel and a right side of the bottom panel, the two side panels are variable cross-section structures, and a thickness of a bottom part of the side panel is greater than a thickness of a top part of the side panel.

In an embodiment, a thickness of the side panel is configured to gradually decrease from a bottom part of the side panel toward a top part of the side panel.

In an embodiment, the bottom panel is a variable cross-section structure, and a thickness of a middle part of the bottom panel is greater than a thickness of the left side of the bottom panel and a thickness of the right side of the bottom panel.

In an embodiment, a thickness of the bottom panel is configured to gradually decrease from a middle part of the bottom panel toward the left side of the bottom panel and the right side of the bottom panel.

In an embodiment, a lower surface of the bottom panel is provided with a plurality of cross beams, and a thickness of the cross beam is configured to gradually decrease from a middle part of the cross beam toward a left end of the cross beam and a right end of the cross beam.

In an embodiment, the lower surface of the bottom panel is further provided with a plurality of longitudinal beams, and each longitudinal beam is provided with a plurality of lightening holes distributed along a length direction of the longitudinal beam.

In an embodiment, the carriage further includes a roof panel, a thickness of a left side of the roof panel and a thickness of a right side of the roof panel are greater than a thickness of a middle part of the roof panel.

In an embodiment, a thickness of the roof panel is configured to gradually decrease from a left side of the roof panel and a right side of the roof panel toward a middle part of the roof panel.

In an embodiment, the carriage further includes a front panel, and a thickness of a bottom part of the front panel is greater than a thickness of a top part of the front panel.

In an embodiment, a thickness of the front panel is configured to gradually decrease from a bottom part of the front panel toward a top part of the front panel.

In an embodiment, the carriage further includes a rear panel, and a thickness of a bottom part of the rear panel is greater than a thickness of a top part of the rear panel.

In an embodiment, a thickness of the rear panel is configured to gradually decrease from a bottom part of the rear panel toward a top part of the rear panel.

The present application further proposes an aluminum alloy cargo compartment, including a cargo compartment side panel, and the cargo compartment side panel includes the aluminum alloy cargo compartment plate as mentioned above.

In an embodiment, the aluminum alloy cargo compartment further includes a plurality of upright columns extending along an up and down direction, and the upright column is fixedly connected to an inner surface of an aluminum alloy cargo compartment side panel.

In an embodiment, the aluminum alloy cargo compartment further includes a protective plate, and the protective plate is detachably provided at the upright column.

The present application further proposes a truck, and the truck includes the aluminum alloy cargo compartment as mentioned above.

In addition, the present application further proposes a preparation method of an aluminum alloy cargo compartment plate, the aluminum alloy cargo compartment plate is configured to enclose and form a cargo compartment, and a thickness of the aluminum alloy cargo compartment plate is configured to change gradually in an up and down direction of the cargo compartment; the preparation method of the aluminum alloy cargo compartment plate includes following steps:
selecting an aluminum alloy equal thickness plate as raw materials, adopting a mode that a round roller rolls with variable gap to roll the aluminum alloy equal thickness plate into shape in one pass, and obtaining an aluminum alloy variable-thickness plate; and
performing annealing, mechanical pre-treatment, chemical pre-treatment and anodizing to the aluminum alloy variable-thickness plate sequentially, and obtaining an aluminum alloy cargo compartment plate with variable material thickness.

In an embodiment, materials of the aluminum alloy equal thickness plate is aluminum alloy of 3XXX series or aluminum alloy of 5XXX series.

In an embodiment, materials of the aluminum alloy equal thickness plate is aluminum alloy of AA5754-O state.

In an embodiment, in the adopting the mode that the round roller rolls with variable gap to roll the aluminum alloy equal thickness plate into shape in one pass:
a roll gap spacing of the round roller is B, and a target thickness of a rolling area of the aluminum alloy equal thickness plate is C, and B=(85% - 95%)*C.

In an embodiment, in the adopting the mode that the round roller rolls with variable gap to roll the aluminum alloy equal thickness plate into shape in one pass:
a feed side of the round roller and a discharge side of the round roller are both provided with a coiler to simultaneously coil the aluminum alloy equal thickness plate during rolling in a reverse direction, wherein an applied curling tension is F1, a yield strength of the aluminum alloy equal thickness plate is F2, and F1≤30%*F2.

In an embodiment, in the adopting the mode that the round roller rolls with variable gap to roll the aluminum alloy equal thickness plate into shape in one pass, defining a rolling pressure as F, a unit of the rolling pressure as t; defining a width of the aluminum alloy equal thickness plate as H, a unit of the width of the aluminum alloy equal thickness plate as mm; defining a yield strength of the aluminum alloy equal thickness plate is δ0.2, a unit of the yield strength of the aluminum alloy equal thickness plate is MPa; defining a difference between a thickness of the aluminum alloy equal thickness plate and a minimum target thickness of the aluminum alloy unequal thickness plate is Δd, and a unit of the difference between the thickness of the aluminum alloy equal thickness plate and the minimum target thickness of the aluminum alloy unequal thickness plate is mm; then, H≤900mm and F=K*H*Δd*δ0.2, and K=0.005 t/MPa*mm2 - 0.015 t/MPa*mm2.

In an embodiment, in the adopting the mode that the round roller rolls with variable gap to roll the aluminum alloy equal thickness plate into shape in one pass:
spraying lubricating liquid at a contact point between the round roller and the aluminum alloy equal thickness plate.

In an embodiment, the lubricating liquid includes kerosene and plant oil, and a volume ratio of the kerosene and the plant oil is 1:0 to 1:5.

In an embodiment, the performing annealing to the aluminum alloy unequal thickness plate includes:
placing the aluminum alloy unequal thickness plate in a bell type annealing furnace, and raising temperature to 240 °C ~ 320 °C in a stepwise heating mode and preserving heat for 2 hours ~ 6 hours.

In an embodiment, after the placing the aluminum alloy unequal thickness plate in the bell type annealing furnace, raising temperature to 240 °C ~ 320 °C in a stepwise heating mode and preserving heat for 2 hours ~ 6 hours, further includes:
performing aging treatment to the aluminum alloy unequal thickness plate, aging temperature of the aging treatment is 120 °C ~ 210 °C, and aging time of the aging treatment is 0.5 hours ~ 16 hours.

In an embodiment, after the performing annealing, mechanical pre-treatment, chemical pre-treatment and anodizing to the aluminum alloy variable-thickness plate sequentially, and obtaining the aluminum alloy cargo compartment plate with variable material thickness, further includes:
the aluminum alloy cargo compartment plate is pressed to have a corrugated structure, and a single corrugation in the corrugated structure is configured to extend along an up and down direction.

In the technical solution of the present application, by designing the aluminum alloy cargo compartment plate to be gradually changed in the up and down direction, so that when the aluminum alloy cargo compartment plate is used to enclose and form the cargo compartment, the thickness of each position of the aluminum alloy cargo compartment side panel can be provided correspondingly according to the stress situation of the cargo compartment in the actual usage process. Appropriately thickening the position where the cargo compartment side panel carries a relatively great cargo collision pressure, so as to improve the puncture resistance and impact resistance of the aluminum alloy cargo compartment side panel. In the position where the cargo compartment side panel carries a relatively small cargo collision pressure, the thickness of the plate is appropriately reduced while ensuring that the plate has sufficient usage strength, thereby reducing the overall weight of the aluminum cargo compartment on the whole.

The aluminum alloy plate provided by the technical solution of the present application is an unequal thickness plate with a variable cross-section structure, the aluminum alloy plate is provided with at least one transition zone in a rolling direction, and the thickness of the transition zone is configured to change continuously along the rolling direction; the transition zone is provided with a first end and a second end provided opposite to the first end in the rolling direction, a thickness of the transition zone at the first end is A1, a thickness of the transition zone at the second end is A2, a length of the transition zone along the rolling direction is D, a difference between A1 and A2 is defined as A3, and D≥100*A3. In this way, the length of the transition zone can be reasonably adjusted according to the thickness difference between the two ends of the transition zone of the aluminum alloy unequal thickness plate, so that it can successfully eliminate the roller indentation on the surface of the aluminum alloy plate and improve the apparent quality of the aluminum alloy plate.

### BRIEF DESCRIPTION OF THE DRAWINGS

In order to explain the embodiments of the present application or the technical solutions in the prior art more clearly, the accompanying drawings needed to be used in the description of the embodiments or the prior art will be briefly introduced below. Obviously, the accompanying drawings in the following description are only some embodiments of the present application, other accompanying drawings can be obtained based on the provided accompanying drawings without exerting creative efforts for those of ordinary skill in the art.
FIG. 1 is a top view of a plug-in type side panel of an aluminum alloy cargo compartment.
FIG. 2 is a cross-sectional structural schematic view of an aluminum alloy cargo compartment plate provided by an embodiment of the present application.
FIG. 3 is a side view of FIG. 2.
FIG. 4 is a structural schematic view of an upright column and a protective plate in an aluminum alloy cargo compartment provided by an embodiment of the present application.
FIG. 5 is a schematic flow chart of a preparation method of an aluminum alloy cargo compartment plate provided by an embodiment of the present application.
FIG. 6 is a schematic flow chart of a preparation method of an aluminum alloy cargo compartment plate provided by another embodiment of the present application.
FIG. 7 is a three-dimensional structural schematic view of a lightweight variable cross-section carriage in the first embodiment of the present application.
FIG. 8 is a schematic view of the cross section of the lightweight variable cross-section carriage along line A-A in FIG. 7.
FIG. 9 is a schematic diagram of the longitudinal section of the lightweight variable cross-section carriage along line B-B in FIG. 7.
FIG. 10 is a structural schematic view of the side panel of the lightweight variable cross-section carriage in FIG. 7.
FIG. 11 is a three-dimensional schematic view of the bottom surface of the lightweight variable cross-section carriage in FIG. 7.
FIG. 12 is a structural schematic view of the cross beam in FIG. 11.
FIG. 13 is a structural schematic view of the longitudinal beam in FIG. 11.
FIG. 14 is a schematic view of the first state of the lightweight variable cross-section carriage in the second embodiment of the present application.
FIG. 15 is a schematic view of the second state of the lightweight variable cross-section carriage in the second embodiment of the present application.
FIG. 16 is a schematic view of the first state of the lightweight variable cross-section carriage in the third embodiment of the present application.
FIG. 17 is a schematic view of the second state of the lightweight variable cross-section carriage in the third embodiment of the present application.
FIG. 18 is a three-dimensional structural schematic view of the lightweight variable cross-section carriage in the fourth embodiment of the present application.
FIG. 19 is a schematic view of a cross section of the lightweight variable cross-section carriage along line C-C in the fourth embodiment of the present application.
FIG. 20 is a schematic view of the first state of the lightweight variable cross-section carriage in the fifth embodiment of the present application.
FIG. 21 is a schematic view of the second state of the lightweight variable cross-section carriage in the fifth embodiment of the present application.
FIG. 22 is a schematic view of a cross-sectional structure design of an alloy unequal thickness plate along a rolling direction of the present application.
FIG. 23 is a schematic view of a cross-sectional structure design of an alloy unequal thickness plate along a rolling direction of the present application.

The realization of the purpose, functional features and advantages of the present application will be further described in conjunction with the embodiments and with reference to the accompanying drawings.

### DETAILED DESCRIPTION OF THE EMBODIMENTS

The technical solutions in the embodiments according to the present application will be clearly and completely described below in conjunction with the accompanying drawings in the embodiments according to the present application, and it is clear that the described embodiments are only a part of the embodiments according to the present application, and not all of the embodiments. Based on the embodiments in the present application, all other embodiments obtained by those of ordinary skill in the art without making creative labor fall within the scope of the present application. If the specific conditions are not specified in the examples, the conditions should be carried out according to the conventional conditions or the conditions recommended by the manufacturer. If the manufacturer of the reagents or instruments used is not indicated, they are all regular products available by commercial purchases.

It should be noted that, if there are directional instructions (such as up, down, left, right, front, back or the like) involved in the embodiments of the present application, the directional indications are only used to explain the relative positional relationship, movement and so on between various components in a specific posture (as shown in the accompanying drawings). If the specific posture changes, the directional indication will also change accordingly.

In addition, if there are descriptions involving "first", "second" or the like involved in the embodiments of the present application, the descriptions of "first", "second" or the like are only for descriptive purposes and cannot be understood as indicating or implying the relative importance or implicitly indicating the quantity of the technical features indicated. Therefore, features defined as "first" and "second" may explicitly or implicitly include at least one of these features. In addition, the meaning of "and/or" appearing in the entire text includes three parallel solutions, taking "A and/or B" as an example, it includes solution A, or solution B, or a solution that satisfies both A and B at the same time. In addition, the technical solutions of various embodiments can be combined with each other, but it must be based on that those of ordinary skill in the art can achieve. When the combination of technical solutions is contradictory or cannot be achieved, it should be considered that such combination of technical solutions does not exist and is not within the protection scope claimed by the present application.

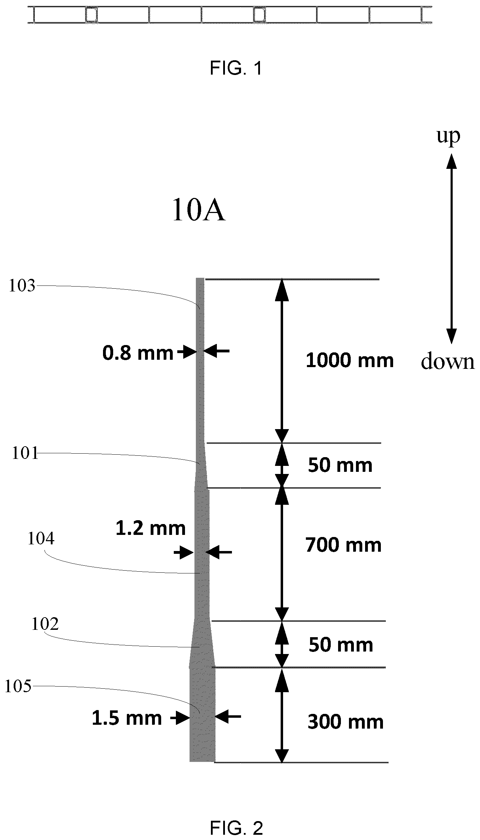

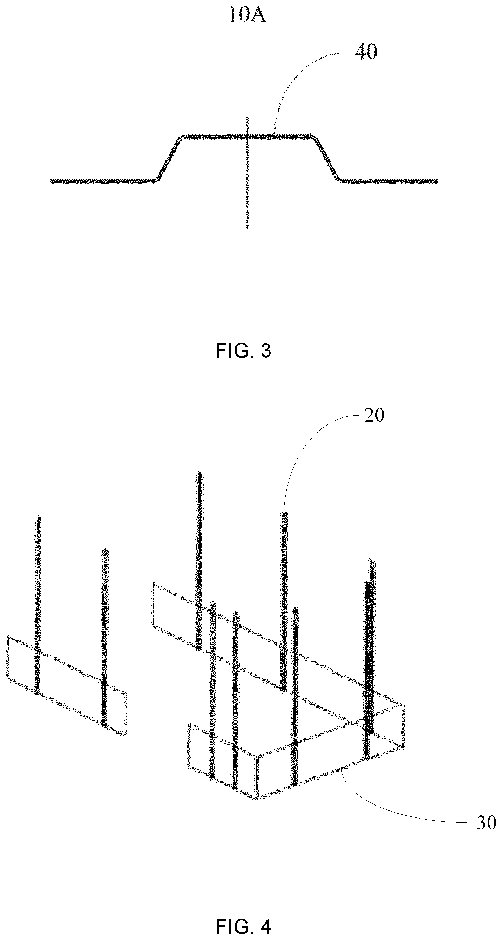

The present application proposes an aluminum alloy cargo compartment plate, and the aluminum alloy cargo compartment plate is configured to enclose and form a cargo compartment. The aluminum alloy cargo compartment plate is a single-layer plate. FIG. 2 and FIG. 3 show an embodiment of the aluminum alloy cargo compartment plate provided by the present application. A thickness of the aluminum alloy cargo compartment plate 10A is configured to change gradually in an up and down direction of the cargo compartment (the up and down direction mentioned herein are all the up and down direction of the cargo compartment or the up and down direction of truck). That is, the thickness of the aluminum alloy cargo compartment plate 10A varies in the up and down direction.

In order to reduce the weight of the aluminum cargo compartment, before the improvement of the present application, the solution of the plug-in type side panel was usually adopted, as shown in FIG. 1. The side panel is made up of several plug-in panel units. The plug-in panel units are made by extrusion molding and are divided into two-layered panel, that is, inner layer panel and outer layer panel, with a reinforcing rib in the middle. The thickness of the inner layer panel and the outer layer panel is 0.8 mm, the thickness of the reinforcing ribs is 1.0 mm, and the distance between the inner layer panel and the outer layer panel is approximately 25 mm. This hollow extruded profile structure helps to improve the stiffness of the side panel, but the double-layer panel also makes the side panel heavier (the total weight of the 4.2 m*2.1 m*2.1 m cargo compartment side panel is about 0kg). In addition, the thickness of the single-layer panel of the plug-in panel unit is only 0.8 mm, which is easy to be punctured and scratched when the cargo collides. At the same time, when loading cargo, for the sake of stability, the cargo is usually located in the middle part of the side panel and the lower part of the side panel, the position above the side panel bears relatively little pressure from cargo collision, so there is room for structural optimization and weight reduction. However, the solution of the plug-in type side panel is difficult to achieve effective structural optimization and weight reduction.

In the technical solution of the present application, by designing the aluminum alloy cargo compartment plate to be gradually changed in the up and down direction, so that when the aluminum alloy cargo compartment plate is used to enclose and form the cargo compartment, the thickness of each position of the aluminum alloy cargo compartment side panel can be provided correspondingly according to the stress situation of the cargo compartment in the actual usage process. Appropriately thickening the position where the cargo compartment side panel carries a relatively great cargo collision pressure, so as to improve the puncture resistance and impact resistance of the aluminum alloy cargo compartment side panel. In the position where the cargo compartment side panel carries a relatively small cargo collision pressure, the thickness of the plate is appropriately reduced while ensuring that the plate has sufficient usage strength, thereby reducing the weight of the aluminum cargo compartment on the whole.

In an embodiment, in some embodiments of the present application, the aluminum alloy cargo compartment plate is made of an aluminum alloy equal thickness plate as raw materials, and is rolled into an aluminum alloy variable-thickness plate by adopting a round roller with variable gap in one pass. In this way, by adopting the mode of rolling into shape in single pass by a round roller with variable gap, the dual regulation and control of plate thickness and plate performance is achieved, so as to guarantee that the place where the thickness of the aluminum alloy cargo compartment plate is thin can still meet the usage strength requirement. Moreover, it can further avoid problems such as deterioration of performance at connections and increase in production processes caused by adopting modes such as laser welding and other modes, thus further guaranteeing the usage performance of the aluminum alloy cargo compartment plate.

Refer to FIG. 3, in some embodiments of the present application, the aluminum alloy cargo compartment plate 10A is further pressed into a corrugated structure 40, which helps to improve the rigidity of the aluminum alloy cargo compartment plate 10A. Specifically, a single corrugation in the corrugated structure 40 is configured to extend along an up and down direction, that is, the direction of the single corrugation is consistent with the thickness change direction of the aluminum alloy cargo compartment plate 10A. The corrugated structure 40 can be made by using a molding machine or a roller press. The corrugated structure 40 can be evenly distributed on the aluminum alloy cargo compartment plate 10A, or the corrugated structure 40 may also be only partially provided on the aluminum alloy cargo compartment plate 10A, and the details may be comprehensively considered according to actual strength requirements, processing difficulty, aesthetics and other factors.

The thickness of the aluminum alloy cargo compartment plate 10A is gradually changed in the up and down direction in various ways. For example, the thickness of the lower part of the aluminum alloy cargo compartment plate 10A may be greater than the thickness of the upper part of the aluminum alloy cargo compartment plate 10A, that is, the lower part is thicker and the upper part is thinner; it can also be that the thickness of the middle part of the aluminum alloy plate 10A is greater than the thickness of the upper part of the aluminum alloy plate 10A and the thickness of the lower part of the aluminum alloy plate 10A, that is, the middle part is thicker and the two ends are thinner, etc. The details may be designed according to the stress conditions of the cargo compartment in the actual application process, which all fall within the scope of the present application.

Specifically, in an embodiment of the present application, it is provided that the thickness of the aluminum alloy cargo compartment plate 10A gradually decreases in a direction from lower to upper. In the actual usage process of the cargo compartment, a relatively common situation may be that the lower part of the cargo compartment side panel carries more cargo impacts, the force is relatively large, while the upper part of the cargo compartment side panel carries relatively small cargo impacts, so the force is relatively small. Therefore, providing the aluminum alloy cargo compartment plate 10A to be thicker at the lower part and thinner at the upper part can better achieve that the weight of aluminum alloy cargo compartment is reduced in the case of guaranteeing that the aluminum alloy cargo compartment plate 10A has sufficient usage strength.

Providing the thickness of the aluminum alloy cargo compartment plate 10A to be gradually changed has various implementation methods, for example, the thickness changes continuously, or the thickness changes in steps, or the thickness changes in a combination of continuous change and step change, etc. In an embodiment of the present application, the thickness of the aluminum alloy cargo compartment plate 10A is configured to change continuously. Specifically, the aluminum alloy cargo compartment plate 10A is provided with at least one transition zone extending along an up and down direction, and a thickness of the aluminum alloy cargo compartment plate 10A in the transition zone is configured to change continuously. By the arrangement of the transition zone, the usage strength of the aluminum alloy cargo compartment plate 10A can be better guaranteed, and it is beneficial to simplifying the preparation process of the aluminum alloy cargo compartment plate 10A.

In specific embodiments of the present application, the transition zone includes a linear transition zone with a linear change in thickness and/or a curvilinear transition zone with a non-linear change in thickness. That is, when only one transition zone is provided, the transition zone can be provided so that the thickness changes linearly or the thickness changes nonlinearly. When a plurality of transition zones are provided, each of the transition zones can be provided independently of each other so that the thickness changes linearly or the thickness changes non-linearly.

The present application does not limit the number of transition zones to be provided. When only one transition zone is provided, the transition zone can extend from the bottom part of the aluminum alloy cargo compartment plate 10A to the top part of the aluminum alloy cargo compartment plate 10A, or the transition zone can only be distributed in a part of the aluminum alloy cargo compartment plate 10A. That is, the aluminum alloy cargo compartment plate 10A can be provided so that the overall thickness changes continuously in the up and down direction, or can be provided so that its thickness changes stepwise in the up and down direction. Specifically, in the embodiment shown in FIG. 2, the transition zone includes a first transition zone 101 and a second transition zone 102 provided sequentially along the up and down direction, and the first transition zone 101 and the second transition zone 102 are both provided so that the thickness changes linearly, which is beneficial to simplifying the preparation process of the aluminum alloy cargo compartment plate 10A. More specifically, the height of the first transition zone 101 and the height of the second transition zone 102 (the height herein refer to the dimension along the up and down direction) are both provided to 50 mm.

In the embodiment of the present application, the aluminum alloy cargo compartment plate 10A is further provided with at least one equal thickness zone extending along the up and down direction, the equal thickness zone is adjacent to the transition zone, and a thickness of a connection between the equal thickness zone and the transition zone is consistent. In this way, the aluminum alloy cargo compartment plate 10A is relatively smooth overall, thus avoiding the sudden change in thickness, which makes the aluminum alloy cargo compartment plate more susceptible to damage due to cargo collision and brings difficulty in processing.

Similarly, the present application does not limit the number of equal thickness zones. One equal thickness zone or a plurality of equal thickness zones can be provided. In the embodiment of the present application, the aluminum alloy cargo compartment plate 10A is provided with a plurality of the transition zones and a plurality of the equal thickness zones, and the plurality of transition zones and the plurality of equal thickness zones are provided alternately. Specifically, in the embodiment shown in FIG. 2, the equal thickness zone includes a first equal thickness zone 103, a second equal thickness zone 104 and a third equal thickness zone 105 that are provided sequentially along the up and down direction. The first equal thickness zone 103 and the second equal thickness zone 104 are connected by the first transition zone 101, and the second equal thickness zone 104 and the third equal thickness zone 105 are connected by the second transition zone 102. More specifically, the height of the first equal thickness zone 103 is 1000 mm, the height of the second equal thickness zone 104 is 700 mm, and the height of the third equal thickness zone 105 is 300 mm. It should be noted that FIG. 2 shows only one embodiment provided by the present application, and the dimensions marked therein do not represent the actual dimensions. In the actual design and processing process of the aluminum alloy cargo compartment plate 10A, the corresponding size design should be based on the actual needs of the aluminum alloy cargo compartment.

In the embodiment of the present application, a maximum thickness of the aluminum alloy cargo compartment plate 10A is E1, a minimum thickness of the aluminum alloy truck plate 10A is E2, and E1/E2≤3. In this way, it can guarantee that the aluminum alloy cargo compartment plate meets usage performance requirements on the basis of weight reduction. That is, regardless of whether the maximum thickness of the aluminum alloy cargo compartment plate 10A or the minimum thickness of the aluminum alloy cargo compartment plate 10A is located in the transition zone or is located in the equal thickness zone, it only needs to satisfy that the ratio of the maximum thickness E1 to the minimum thickness E2 does not exceed 3. Specifically, in the embodiment shown in FIG. 2, the maximum thickness of the aluminum alloy cargo compartment plate 10A is located in the third equal thickness zone 105, the minimum thickness of the aluminum alloy cargo compartment plate 10A is located in the first equal thickness zone 103, and the thicknesses of the first equal thickness zone 103, the thicknesses of the second equal thickness zone 104, and the thicknesses of the third equal thickness zone 105 are provided to 0.8 mm, 1.2 mm and 1.5 mm in sequence.

The present application further proposes an aluminum alloy cargo compartment, the aluminum alloy cargo compartment includes a cargo compartment side panel, the cargo compartment side panel includes an aluminum alloy cargo compartment plate, and the specific structure of the aluminum alloy cargo compartment plate 10A refers to the above embodiment. It can be understood that since the aluminum alloy cargo compartment provided by the present application adopts all the embodiments of the aluminum alloy cargo compartment plate 10A provided by the present application, the aluminum alloy cargo compartment provided by the present application has at least all the beneficial effects brought by the above embodiments, which will not be described again one by one.

When the aluminum alloy cargo compartment plate 10A encloses and forms the aluminum alloy cargo compartment, the cargo compartment side panel is thicker at the lower part and thinner at the upper part, the cargo compartment side panels are connected by welding, riveting, gluing or the like, and fixed with the upper longitudinal frame of the cargo compartment and the lower longitudinal frame of the cargo compartment by riveting or welding. Refer further to FIG. 4, the aluminum alloy cargo compartment further includes a plurality of upright columns 20 extending along an up and down direction, and the upright column 20 is fixedly connected to an inner surface of an aluminum alloy cargo compartment side panel. In this way, by providing the upright column 20 in the cargo compartment and connecting the cargo compartment side panel to the upright column 20, achieving further fixation of the aluminum alloy cargo compartment plate 10A, and improving structural stability and strength. It should be noted that when the aluminum alloy cargo compartment plate 10A is provided with the corrugated structure 40, the number of the upright columns 20 can be appropriately reduced. In the embodiment shown in FIG. 4, nine upright columns 20 are provided.

The upright column 20 can be made of aluminum profile or non-aluminum profile, such as solid wood profiles or the like. The upright column 20 is fixed to the upper longitudinal frame of the cargo compartment and the lower longitudinal frame of the cargo compartment by nailing, riveting, bolting, or the like. After the assembly of the aluminum alloy cargo compartment plate 10A and the upright column 20 is completed, it can perform overall CAE (Computer Aided Engineering) analysis on the cargo compartment and perform CAE analysis of side panel stiffness. According to the simulation results, the structural design of the corrugated structure 40 and/or the structural design of the upright column 20 on the aluminum alloy cargo compartment plate 10A will be adjusted timely until it passes the CAE simulation analysis.

Refer to FIG. 4, in the embodiment of the present application, the aluminum alloy cargo compartment further includes a protective plate 30, and the protective plate 30 is detachably provided at the upright column 20. The protective plate 30 can be made of materials that are easy to purchase, light in quality and low in cost, such as wooden materials or the like, including but not limited to poplar wood boards or the like. In the embodiment, the thickness of the protective plate 30 is not greater than 3 mm. In this way, by the arrangement of the protective plate 30, the cargo compartment side panel can be protected to avoid the impact force of cargo collision being directly transmitted to the cargo compartment side panel, thus extending the service life of the cargo compartment side panel, thereby solving the problem that the solution of the plug-in type side panel has no skeleton structure and is not convenient for the installation and adjustment of the inner protective plate. Moreover, by providing the protective plate 30 to be detachably connected to the upright column 20, such as nailing or the like, the height of the protective plate 30 can be adjusted up and down according to the actual situation of loading cargo, thus achieving the purpose of effectively protecting the cargo compartment side panel. In the embodiment of the present application, by the arrangement of the corrugated structure 40, the upright column 20 and the protective plate 30, the cargo compartment side panel can finally achieve a weight reduction of 30 kg to 50 kg compared to the plug-in type side panel.

Adopting the solution of the cargo compartment side panel provided by the present application will help to promote the development of rolling technology of aluminum alloy variable-thickness plate, combined with subsequent stamping, rolling, molding, stretching, bending, welding or other processes, more aluminum alloy variable-thickness plate products can be prepared for automobiles, thus accelerating the process of replacing steel with aluminum in automotive components.

The present application further proposes a truck including an aluminum alloy cargo compartment, and the specific structure of the aluminum alloy cargo compartment refers to the above embodiment. It can be understood that since the truck provided by the present application adopts all the embodiments of the aluminum alloy cargo compartment provided by the present application, the truck provided by the present application has at least all the beneficial effects brought by the above embodiments, which will not be described again one by one.

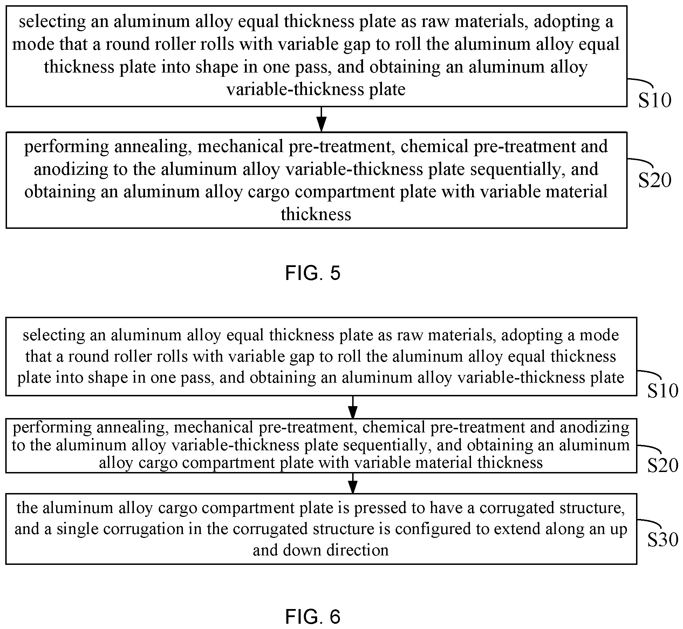

The present application further proposes a preparation method of an aluminum alloy cargo compartment plate 10A. Firstly, according to the structural design ideas of the aluminum alloy cargo compartment plate 10A provided above in the present application, carrying out corresponding structural design and size design for the aluminum alloy cargo compartment plate 10A. Then, adopting a mode that a round roller rolls with variable gap to roll into shape in single pass, and obtaining the aluminum alloy cargo compartment plate 10A. Refer specifically to FIG. 5, the preparation method of the aluminum alloy cargo compartment plate 10A includes following steps:
Step S10: selecting an aluminum alloy equal thickness plate as raw materials, adopting a mode that a round roller rolls with variable gap to roll the aluminum alloy equal thickness plate into shape in one pass, and obtaining an aluminum alloy variable-thickness plate.
Step S20: performing annealing, mechanical pre-treatment, chemical pre-treatment and anodizing to the aluminum alloy variable-thickness plate sequentially, and obtaining an aluminum alloy cargo compartment plate with variable material thickness.

Taking the aluminum alloy equal thickness plate as raw materials, adopting a mode that a round roller rolls with variable gap to roll the aluminum alloy equal thickness plate, and rolling into shape in single pass. During the rolling process, variable thickness rolling is achieved by adjusting the roll gap spacing (that is, the gap between roller surfaces of the round rollers) of the round rollers. A thickness gauge is provided at the exit of the roll gap, and a code reader is provided behind the thickness gauge to measure the rolling length of the plate. By adopting the mode of rolling into shape in single pass by a round roller with variable gap, it can avoid problems such as deterioration of performance at connections and increase in production processes caused by modes such as laser welding and other modes, thus further guaranteeing the usage performance of the aluminum alloy cargo compartment plate. After the rolling is completed, then performing annealing treatment to the aluminum alloy variable-thickness plate that has been rolled. By a simple heat treatment process, achieving dual differential regulation and control of thickness and performance of the aluminum alloy variable-thickness plate, and guaranteeing the strength of the aluminum alloy variable-thickness plate where the thickness is relatively thin. Then, performing mechanical pre-treatment, chemical pre-treatment and anodizing treatment in sequence to improve the surface quality of the aluminum alloy variable-thickness plate.

In the embodiment of the present application, the aluminum alloy equal thickness plate is preferred to select a plate whose material is aluminum alloy of 3XXX series or aluminum alloy of 5XXX series, which has the characteristics of good formability and cannot be strengthened by heat treatment, and it is helpful to ensure the formability of the plate and reduce the heat treatment process and cost.

In a specific embodiment of the present application, materials of the aluminum alloy equal thickness plate is aluminum alloy of AA5754-O state.

When adopting a round roller and a variable gap roller to roll the aluminum alloy carriage plate 10A into shape, it is preferred to select an aluminum alloy equal thickness plate that is slightly thicker than the thickness of the thickest area of the target plate as the rolling object, and regulating and controlling the roll gap spacing of the round roller timely during the rolling process, so as to achieve variable thickness rolling. Specifically, a roll gap spacing of the round roller is B, and a target thickness of a rolling area of the aluminum alloy equal thickness plate is C, and B=(85% - 95%)*C. That is, providing the roll gap spacing of the round roller to be 5% ~ 15% smaller than the target thickness of each part of the plate, so as to offset the thickness deviation of rolling plate caused by the elastic deformation of the plate, roll deflection and flattening deformation, thereby achieving high-precision forming of the plate.

In a specific embodiment of the present application, B=(88% - 90%)*C.

In some embodiments of the present application, a feed side of the round roller and a discharge side of the round roller are both provided with a coiler to simultaneously coil the aluminum alloy equal thickness plate during rolling in a reverse direction. The curling force exerted by the motor on the discharge side of the round roller should not be less than the curling force exerted by the motor on the feed side of the round roller, so as to achieve smooth feeding and rolling. In this way, using the coiler to apply tension to the aluminum alloy plate 100 during rolling can improve the flatness of the rolling plate. Experiments show that the higher the curling force, the higher the flatness of the rolling plate. In some embodiments of the present application, the curling tension is provided to not exceed 30% of the yield strength of the plate itself, that is, defining an applied curling tension is F1, a yield strength of the aluminum alloy equal thickness plate is F2, and the following relationship is satisfied between F1 and F2: F1≤30%*F2. In this way, by adjusting the curling tension, it can greatly avoid the occurrence of strip breakage or other phenomenon during the rolling process, thus effectively improving production efficiency, problems such as wavy shapes in the plate can also be improved at the same time, thus improving the apparent quality of the plate.

In some embodiments of the present application, defining a rolling pressure as F, a unit of the rolling pressure as t; defining a width of the aluminum alloy equal thickness plate as H, a unit of the width of the aluminum alloy equal thickness plate as mm; defining a yield strength of the aluminum alloy equal thickness plate is δ0.2, a unit of the yield strength of the aluminum alloy equal thickness plate is MPa; defining a difference between a thickness of the aluminum alloy equal thickness plate and a minimum target thickness of the aluminum alloy unequal thickness plate is Δd, and a unit of the difference between the thickness of the aluminum alloy equal thickness plate and the minimum target thickness of the aluminum alloy unequal thickness plate is mm; then, H≤900mm, and the rolling pressure, the yield strength of the plate, width of the plate and thickness of the plate roughly follow the following mathematical relationship: F=K*H*Δd*δ0.2, and K=0.005 t/MPa ~ 0.015 t/MPa. In this way, by adjusting the width of the rolling plate and rolling pressure, the pine branch-like pattern on the edge of the rolling plate can be successfully eliminated, thereby improving the apparent quality of the aluminum alloy plate 100.

In an embodiment, in the rolling process, spraying lubricating liquid at a contact point between the round roller and the aluminum alloy equal thickness plate, so as to reduce the thermal crown of the roller, and improve the flatness of the rolling plate surface and internal stress distribution uniformity of the rolling plate surface. Specifically, the lubricating liquid includes kerosene and plant oil, and a volume ratio of the kerosene and the plant oil is 1:0 ~ 1:5. That is, in some embodiments of the present application, the lubricating liquid may only include kerosene. In other embodiments of the present application, the lubricating liquid may also include kerosene and plant oil at the same time, and the volume ratio of the kerosene and plant oil is not less than 1:5.

In order to facilitate the subsequent annealing treatment of the aluminum alloy unequal thickness plate, it is preferred that the aluminum alloy unequal thickness plate after completion of rolling is made into coil material and then performed annealing treatment. According to the general rule of cold rolling deformation of aluminum alloy plate 100, the greater the deformation amount in a single pass, the better the work hardening effect of the plate, but the elongation will become worse. Therefore, the thinnest part of the unequal thickness plate has relatively high strength, but the elongation may decrease significantly. Thus, it is necessary to combine the subsequent annealing process to achieve that the performance of each area of the plate all meets the standards. Specifically, in some embodiments of the present application, the performing annealing to the aluminum alloy unequal thickness plate in step S20 includes:
Placing the aluminum alloy unequal thickness plate in a bell type annealing furnace, and raising temperature to 240 °C ~ 320 °C in a stepwise heating mode and preserving heat for 2 hours ~ 6 hours.

Specifically, the aluminum alloy unequal thickness plate is placed in a bell type annealing furnace, the aluminum alloy unequal thickness plate is a coil material, the inner diameter of the coil material is greater than 100 mm, the outer diameter of the coil material is not larger than the inner diameter of the bell type annealing furnace, and the center of a circle of the coil material is on a straight line along the height direction. Then, heating the aluminum alloy unequal thickness plate, and the temperature is raised to 240 °C ~ 320 °C by a stepwise heating mode. then preserving heat for 2 hours ~ 6 hours at this temperature, so that the annealing treatment is completed. For the thickest area of the aluminum alloy unequal thickness plate, because the small deformation in a single pass is not large, there are relatively few internal defects and energy storage in the plate, and the strength and elongation have slightly changed compared to the initial state, and annealing at temperatures below 320 °C also has little effect on the mechanical properties of this area. As for the thinnest area of the aluminum alloy unequal thickness plate, because the deformation of the single pass in this area is relatively large, the deformation of the single pass even reaches the deformation limit of this area, the work hardening effect is greatly improved, as a result, the strength of this area is significantly improved compared to the initial state, and is also higher than other areas of the unequal thickness plate. Correspondingly, work hardening also results in a significant decrease in elongation in the thinnest area. When the annealing temperature is too low (lower than 240 °C), the annealing and softening effect in each area is very poor. For alloy systems that can be age-strengthened, high-temperature aging will also occur, causing the aging precipitate phase to be large in size and unevenly distributed, seriously affecting the precipitation strengthening effect. When the annealing temperature is too high (higher than 320 °C), static recrystallization softening occurs in the thinnest area, while the elongation in this area increases significantly, the strength decreases rapidly. For the thickest area, grain growth occurs, and both strength and elongation decrease. Therefore, it is difficult to ensure that the mechanical properties of each area of the unequal thickness plate all meet the standards. After annealing at 240 °C ~ 320 °C for a certain duration, static recovery occurs inside the plate, and the density of defects such as dislocations decreases significantly, resulting in a decrease in alloy strength, but a significant increase in elongation. In this way, by optimizing the annealing process, the embodiment of the present application greatly increases the elongation of the thinnest area while ensuring that the strength of each area of the aluminum alloy unequal thickness plate does not change significantly.

It should be noted that during the actual processing of aluminum alloy plate 100, the annealing temperature and time can be appropriately adjusted within the above range according to actual use needs to obtain different mechanical properties. When the thickness of the plate is between the thickest area and thinnest area, the change rule of mechanical properties before annealing and after annealing is also between the two. Therefore, it is necessary to strictly require the mechanical properties of the initial state of the plate to ensure that all areas of the unequal thickness plate all meet the usage requirements.

After the annealing treatment is completed, in some embodiments of the present application, for aluminum alloy systems that cannot be strengthened by heat treatment, after the annealing and preserving heat is completed, stopping heating and opening the furnace door, allowing the coil to cool down naturally and slowly, so that the performance stabilization treatment of aluminum alloy can be achieved. In some embodiments of the present application, for an aluminum alloy system that can be strengthened by heat treatment, the coiled material after annealing and heat preservation can be quickly transferred to the aging furnace for performing aging treatment, specifically, aging temperature of the aging treatment is 120 °C ~ 210 °C, and aging time of the aging treatment is 0.5 hours ~ 16 hours. After completing the aging treatment, the aluminum alloy can be naturally cooled down in the air, so that the performance stabilization treatment of aluminum alloy can be achieved, thus achieving aluminum alloy strengthening.

Refer to FIG. 3, in other embodiments of the present application, the aluminum alloy cargo compartment plate 10A is further designed with a corrugated structure 40, and a single corrugation in the corrugated structure 40 is configured to extend along an up and down direction, that is, the trend of the single corrugation is consistent with the thickness change direction of the aluminum alloy cargo compartment plate 10A. Correspondingly, as shown in FIG. 6, the preparation method of the aluminum alloy cargo compartment plate 10A further includes the following steps after step S20:
Step S30: the aluminum alloy cargo compartment plate 10A is pressed to have a corrugated structure, and a single corrugation in the corrugated structure is configured to extend along an up and down direction.

The corrugated structure 40 can be made by a molding machine or a roller press, and the corrugated structure 40 can be evenly distributed on the aluminum alloy cargo compartment plate 10A, or the corrugated structure 40 may also be provided only partially on the aluminum alloy cargo compartment plate 10A, and the details may be comprehensively considered based on actual strength requirements, processing difficulty, aesthetics and other factors.

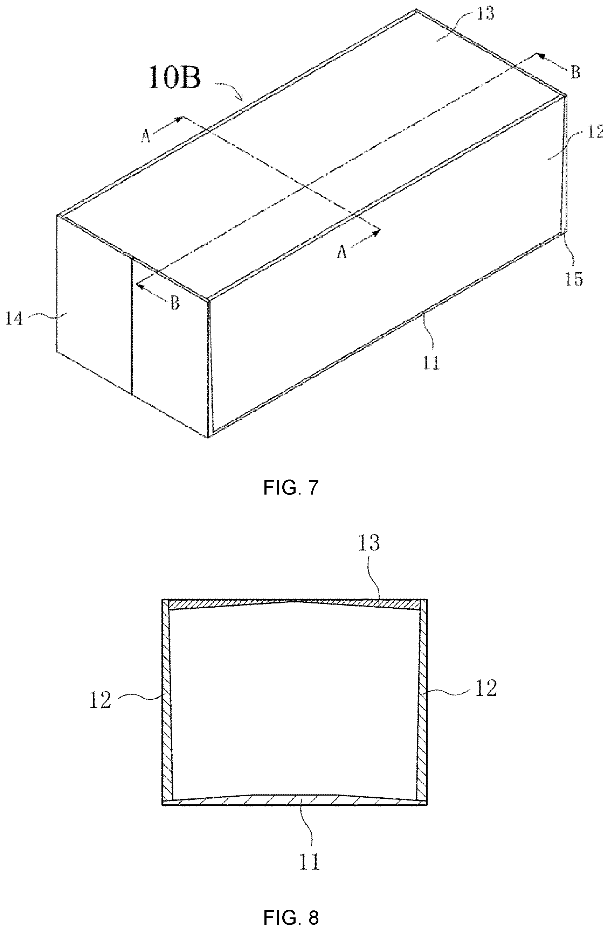

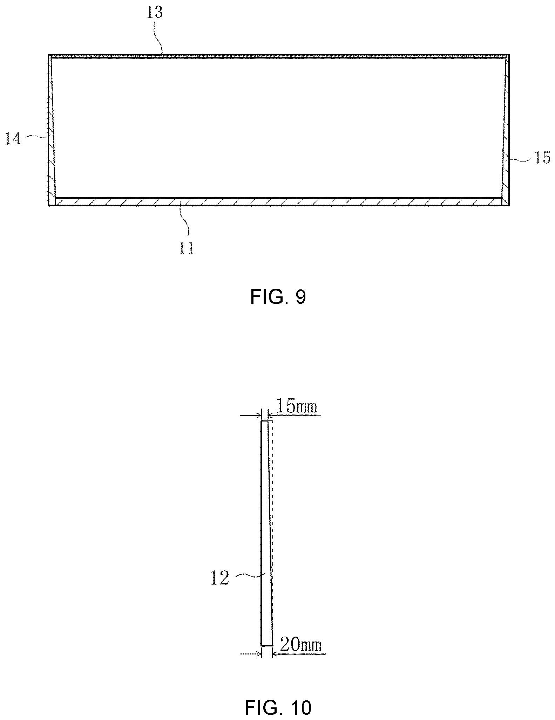

Refer to FIG. 7 to FIG. 9, an embodiment of the present application further provides a lightweight variable cross-section carriage 10B, the carriage 10B is provided with at least a bottom panel 11 and two side panels 12, the two side panels 12 are respectively provided on a left side of the bottom panel 11 and a right side of the bottom panel 11, the two side panels 12 are variable cross-section structures, and a thickness of a bottom part of the side panel 12 is greater than a thickness of a top part of the side panel 12.

In this embodiment, a thickness of the side panel 12 is configured to gradually decrease from a bottom part of the side panel 12 toward a top part of the side panel 12.

On the basis that the two side panels 12 are variable cross-section structures, furthermore, the bottom panel 11 is also a variable cross-section structure, and a thickness of a middle part of the bottom panel 11 is greater than a thickness of the left side of the bottom panel 11 and a thickness of the right side of the bottom panel 11.

In this embodiment, a thickness of the bottom panel 11 is configured to gradually decrease from a middle part of the bottom panel 11 toward the left side of the bottom panel 11 and the right side of the bottom panel 11.

The carriage 10B further includes a roof panel 13, on the basis of the two side panels 12 are variable cross-section structures, furthermore, the roof panel 13 is also a variable cross-section structure, a thickness of a left side of the roof panel 13 and a thickness of a right side of the roof panel 13 are greater than a thickness of a middle part of the roof panel 13.

In this embodiment, a thickness of the roof panel 13 is configured to gradually decrease from a left side of the roof panel 13 and a right side of the roof panel 13 toward a middle part of the roof panel 13.

The carriage 10B further includes a front panel 14, on the basis of the two side panels 12 are variable cross-section structures, furthermore, the front panel 14 is also a variable cross-section structure, and a thickness of a bottom part of the front panel 14 is greater than a thickness of a top part of the front panel 14.

In this embodiment, a thickness of the front panel 14 is configured to gradually decrease from a bottom part of the front panel 14 toward a top part of the front panel 14.

The carriage 10B further includes a rear panel 15, on the basis of the two side panels 12 are variable cross-section structures, furthermore, the rear panel 15 is also a variable cross-section structure, and a thickness of a bottom part of the rear panel 15 is greater than a thickness of a top part of the rear panel 15.

In this embodiment, a thickness of the rear panel 15 is configured to gradually decrease from a bottom part of the rear panel 15 toward a top part of the rear panel 15.

It can be understood that the above-mentioned bottom panel 11 may be a whole panel, or may be assembled from a plurality of sub-panels by welding or other methods.

Similarly, any of the above-mentioned side panel 12, roof panel 13, front panel 14 or rear panel 15 can be a whole panel, or can be assembled from a plurality of sub-panels by welding or other methods.

For example, the front panel 14 can be formed by splicing two sub-panels. The two sub-panels of the front panel 14 are respectively hinged with the two side panels 12, so that each sub-panel of the front panel 14 can be rotated and opened independently to facilitate the entry and exit of people and cargo into the interior of the carriage 10B.

The lightweight variable cross-section carriage provided in this embodiment is based on the idea of "equal strength" and the material thickness is designed as needed. Under the condition of meeting the load-bearing strength requirements, the carriage adopts the variable cross-section design to maximize the weight reduction, thus achieving the structural design of the weight reduction and lightweight of trucks, effectively reducing the driving fuel consumption of vehicle, and increasing cargo capacity.

Aiming at a certain carriage 10B made of composite materials, if the thickness of the bottom part of the side panel 12, the thickness of the bottom part of the front panel 14 and the thickness of the bottom part of the rear panel 15 of the carriage 10B remain unchanged at 20 mm, and the thickness of the top part of side panel 12, the thickness of the top part of front panel 14 and the thickness of the top part of rear panel 15 is reduced to 15 mm, then:
Density of side panel 12, density of front panel 14 and density of rear panel 15: 220 kg/m³.
Cross-sectional area reduction: 5275 mm².
The length of the two side panels 12, front panel 14 and rear panel 15: 9342 mm.
Therefore, the side panel 12, the front panel 14 and the rear panel 15 can achieve weight reduction: 10.8 kg.

And if the thickness of both sides of the roof panel 13 of the carriage 10B remains unchanged at 20 mm, and the thickness of the middle part of the roof panel 13 is reduced to 10 mm, then:
Density of roof panel 13: 220 kg/m³.
Cross-sectional area reduction: 13967 mm².
Length of roof panel 13: 4168 mm.
Therefore, the roof panel 13 can achieve weight reduction: 12.8 kg.

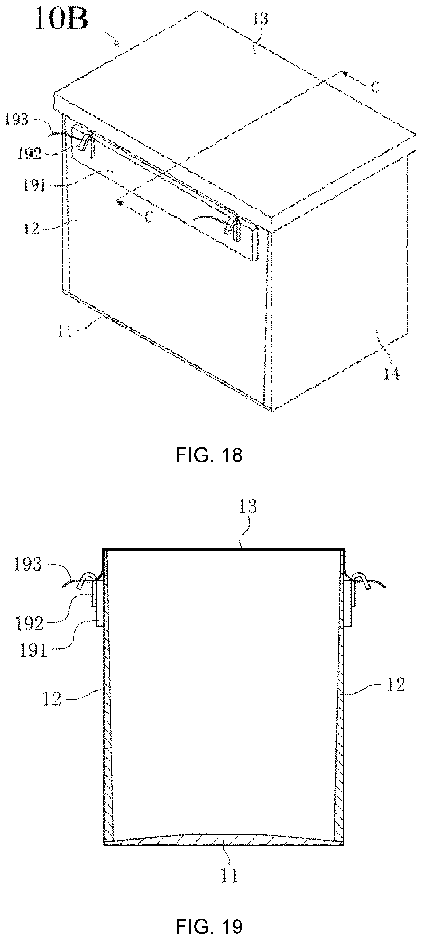

In addition, if the roof panel 13 is changed to waterproof canvas (see FIG. 18 and FIG. 19 below), then:
Density of roof panel 13: 220 kg/m³.
Weight of roof panel 13: 37.8 kg.
Weight of the canvas plus the accessories: 10 kg.
Therefore, the roof panel 13 can achieve weight reduction: 27.8 kg.

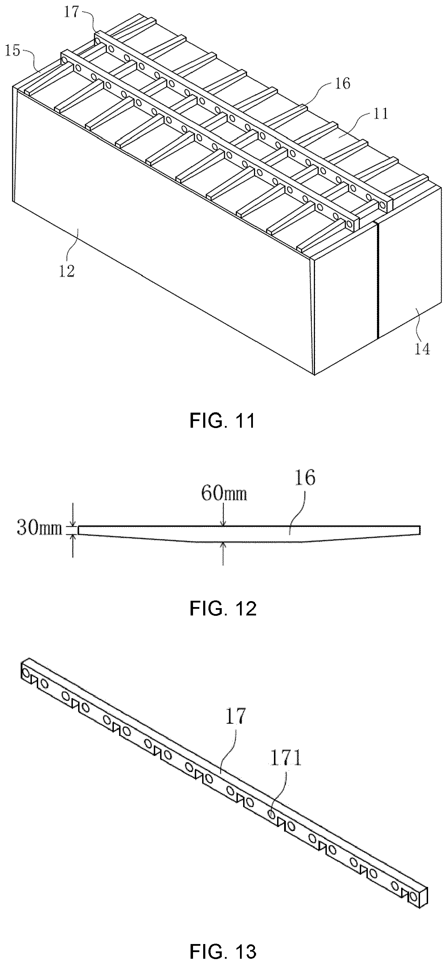

Refer to FIG. 11 and FIG. 12, a lower surface of the bottom panel 11 is provided with a plurality of cross beams 16, for example, ten cross beams 16, and each cross beam 16 is trapezoidal in design, that is, a thickness of the cross beam 16 is configured to gradually decrease from a middle part of the cross beam 16 toward a left end of the cross beam 16 and a right end of the cross beam 16.

If the cross beam 16 is made of aluminum, the thickness in the middle of the cross beam 16 remains unchanged at 60 mm, and the thickness of the cross beam 16 at both ends is reduced to 30 mm, then:
Density of aluminum cross beam 16: 2700 kg/m³.
Weight loss per cross beam 16: 2 kg.
Therefore, ten cross beams 16 can achieve weight reduction: 20 kg.

Refer to FIG. 11 and FIG. 13, the lower surface of the bottom panel 11 is further provided with a plurality of longitudinal beams 17, for example, two longitudinal beams 17, and each longitudinal beam 17 is provided with a plurality of lightening holes 171 distributed along a length direction of the longitudinal beam 17.

If the longitudinal beam 17 is made of aluminum, and each longitudinal beam 17 is provided with seventeen round holes of Φ 60 mm, then:
Density of aluminum longitudinal beam 17: 2700 kg/m³.
Weight loss per lightening hole 171: 0.03 kg.

Therefore, the two longitudinal beams 17 can achieve weight reduction: 0.03*17*2=1.02 kg.

The above-mentioned cross beam 16 and longitudinal beam 17 are configured to carry the bottom panel 11 and to fix the entire carriage 10B to the frame of the truck (not shown in the figure).

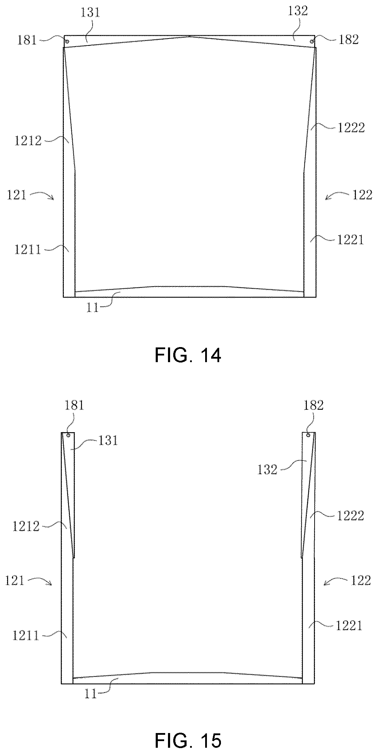

Refer to FIG. 14 to FIG. 17, in other embodiments of the present application, the two side panels 12 are respectively a left side panel 121 and a right side panel 122, the left side panel 121 is provided with a lower half part 1211 and an upper half part 1212, the right side panel 122 is provided with a lower half part 1221 and an upper half part 1222, and the top roof panel 13 is formed by splicing the left roof panel 131 and the right roof panel 132. The left roof panel 131 is rotatably connected to the top part of the left side panel 121 by the first rotating shaft 181, and the right roof panel 132 is rotatably connected to the top part of the right side panel 122 by the second rotating shaft 182. Both the left roof panel 131 and the right roof panel 132 can rotate and transform between the horizontal state and the vertical state.

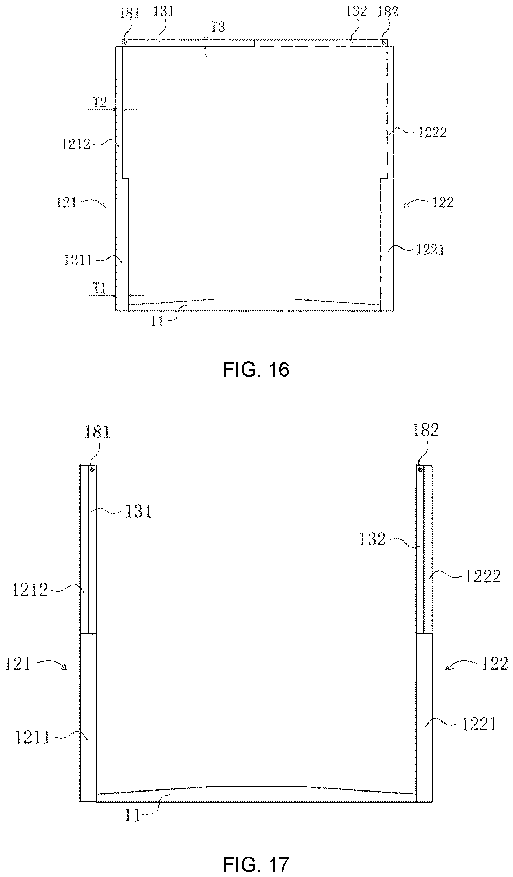

As shown in FIG. 14 and FIG. 16, when the left roof panel 131 and the right roof panel 132 are both rotated to a horizontal state, the left roof panel 131 and the right roof panel 132 are spliced to each other to form the roof panel 13.

As shown in FIG. 15 and FIG. 17, when the left roof panel 131 is rotated to the vertical state, the left roof panel 131 overlaps with the upper half part 1212 of the left side panel 121. When the right roof panel 132 is rotated to a vertical state, the right roof panel 132 overlaps the upper half part 1222 of the right side panel 122.

Specifically, refer to FIG. 15 and FIG. 17, when the left roof panel 131 is rotated to a vertical state and overlaps the upper half part 1212 of the left side panel 121, the left roof panel 131 and the left side panel 121 are combined together to form a complete rectangular side panel structure. When the right roof panel 132 is rotated to a vertical position and overlaps the upper half part 1222 of the right side panel 122, the right roof panel 132 and the right side panel 122 are combined together to form a complete rectangular side panel structure.

In the embodiment shown in FIG. 14 and FIG. 15, the thickness of the lower half part 1211 of the left side panel 121 and the thickness of the lower half part 1221 of the right side panel 122 are uniform, the thickness of the upper half part 1212 of the left side panel 121 and the thickness of the upper half part 1222 of the right side panel 122 gradually decrease from lower to upper, the thickness of the left roof panel 131 gradually decreases from left to right, and the thickness of the right roof panel 132 gradually decreases from right to left.

In the embodiment shown in FIG. 16 and FIG. 17, the thickness of the lower half part 1211 of the left side panel 121 and the thickness of the lower half part 1221 of the right side panel 122 are uniform and have a first thickness T1. The thickness of the upper half part 1212 of the left side panel 121 and the thickness of the upper half part 1222 of the right side panel 122 are uniform and have a second thickness T2. The thicknesses of the left roof panel 131 and the thickness of the right roof panel 132 are uniform and have a third thickness T3. Both the second thickness T2 and the third thickness T3 are smaller than the first thickness T1, and the sum of the second thickness T2 and the third thickness T3 is equal to the first thickness T1.

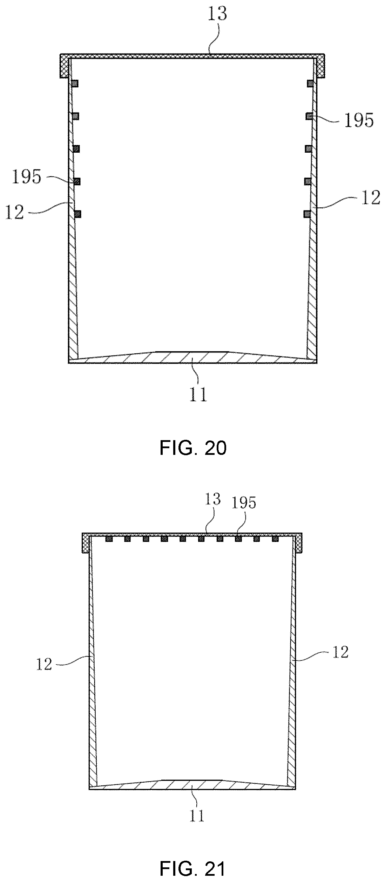

Refer to FIG. 18 to FIG. 21, in other embodiments of the present application, the roof panel 13 adopts waterproof canvas or thin plates. The thin plates can be made of plastic or composite materials. In FIG. 18 and FIG. 19, it is shown that the roof panel 13 is waterproof canvas. In FIG. 20 and FIG. 21, it is shown that the roof panel 13 is thin plate. By using waterproof canvas or thin plates as the roof panel 13, the weight of the roof panel 13 can be significantly reduced.

Refer to FIG. 18 and FIG. 19, when the roof panel 13 is waterproof canvas, the carriage 10B further includes two fixed panels 191 (only one of the fixed panels 191 is visible in FIG. 18). Two fixed panels 191 are provided at the top parts of the outer surfaces of the two side panels 12 respectively. Each fixed plate 191 is, for example, in the shape of a strip, and is provided on the corresponding side panel 12 along the longitudinal direction of the carriage 10B. Each fixed panel 191 is provided with a fixing piece 192. As a waterproof canvas of the roof panel 13, its left side and right side are respectively fixed to the fixing pieces 192 on the two fixed panels 191. Specifically, the fixing piece 192 is, for example, a fixing hook. A plurality of the fixing hooks 192 can be provided, and are distributed on the fixed panel 191. By fixing the left side of the waterproof canvas 13 and the right side of the waterproof canvas 13 to the fixing hooks 192 of the two fixed panels 191 by fastening rope 193 respectively, the waterproof canvas 13 can be tensioned and fixed to prevent the waterproof canvas 13 from shaking or falling off during driving.

Refer to FIG. 20 and FIG. 21, when the roof panel 13 is a thin plate, the carriage 10B further includes a detachable reinforcing piece 195. The reinforcing piece 195 is provided with a first installation state and a second installation state. The reinforcing piece 195 is provided at the inner surface of the upper end of the side panel 12 in the first installation state, so as to reinforce the strength of the side panel 12. The reinforcing piece 195 is provided at the inner surface of the roof panel 13 in the second installation state, so as to reinforce the strength of the roof panel 13. In this embodiment, the reinforcing piece 195 is detachable, so when the roof panel 13 is not used (for example, on a sunny day, the roof panel 13 may not need to be used), at this time, the reinforcing piece 195 can be chosen to be provided on the inner surface of the upper end of the side panel 12 to reinforce the side panel 12, as shown in FIG. 20. When using the roof panel 13 (for example, on rainy days, it is necessary to use the roof panel 13 to prevent rain), since the roof panel 13 is a thin plate and its strength is relatively weak, the reinforcing piece 195 can be removed from the inner surface of the upper end of the side panel 12 and installed on the inner surface of the roof panel 13 to reinforce the roof panel 13, as shown in FIG. 21.

The lightweight variable cross-section carriage 10B provided by the above embodiments of the present application is based on the idea of "equal strength" and the material thickness is designed as needed. Under the condition of meeting the load-bearing strength requirements, the carriage adopts the variable cross-section design to maximize the weight reduction, thus achieving the structural design of the weight reduction and lightweight of trucks, effectively reducing the driving fuel consumption of vehicle, and increasing cargo capacity

Furthermore, the present application further provides a vehicle, and the vehicle includes the lightweight variable cross-section carriage 10B described in any of the above embodiments.

The technical solution of the present application will be further described in detail below with reference to specific embodiments and accompanying drawings. It should be understood that the following embodiments are only used to explain the present application and are not intended to limit the present application.

### Embodiment 1

(1) Selecting aluminum alloy coiled materials of AA5754-O state with a thickness of 1.8 mm as the rolling raw material for aluminum alloy variable-thickness plate. The cross-sectional structure design of the aluminum alloy variable-thickness plate is shown in FIG. 2. The bottom part of the aluminum alloy variable-thickness plate facing upward is in order: the third equal thickness zone 105 with a height of 300 mm and a thickness of 1.5 mm, the second transition zone 102 with a height of 50 mm and a thickness that changes non-linearly, the second equal thickness zone 104 with a height of 700 mm and a thickness of 1.2 mm, the first transition zone 101 with a height of 50 mm and a thickness that changes nonlinearly, and the first equal thickness zone 103 with a height of 1000 mm and a thickness of 0.8 mm.
(2) Adopting a mode that a round roller rolls with variable gap to perform variable material thickness rolling on aluminum alloy coiled material. Defining the target thickness of the area to be rolled of the aluminum alloy coiled material to be C. During the rolling process, adjusting the roller gap spacing of the round roller B timely to make it meet B=(88% - 90%)*C. At the same time, a feed side of the roller and a discharge side of the roller are respectively provided with a coiler to reversely curl the plate, and the motor curling force on both sides of the roller is the same. In addition, during the rolling process, lubricating liquid mixed with kerosene and plant oil is sprayed at the contact point between the roller and the plate (the volume ratio of kerosene and plant oil is 1:1). The plate is rolled into shape in one pass. A thickness gauge is provided at the exit of the roll gap, and a code reader is provided behind the thickness gauge to measure the rolling length of the plate, and the thickness tolerance of the plate is controlled to be ±0.1 mm.
(3) Coiling the completed rolled aluminum alloy equal thickness plate. The inner diameter of the coil material is 250 mm, and the outer diameter of the coil material is 600 mm. The coils are stacked in a bell type annealing furnace in the form that the center of the circle of the coil materials are located on the same straight line along the height direction, heated to 350 °C within 1 hour, and preserved heat for 2 hours. Then, stopping heating, and opening the furnace hood to slowly cool the coil material to room temperature. Performing mechanical pre-treatment, chemical pre-treatment and anodizing to the annealed aluminum alloy equal thickness plate sequentially, and obtaining the aluminum alloy cargo compartment plate.

### Embodiment 2

(1) Selecting aluminum alloy coiled materials of AA5754-O state with a thickness of 1.8 mm as the rolling raw material for aluminum alloy variable-thickness plate. The cross-sectional structure design of the aluminum alloy variable-thickness plate is shown in FIG. 2. The bottom part of the aluminum alloy variable-thickness plate facing upward is in order: the third equal thickness zone 105 with a height of 300 mm and a thickness of 1.5 mm, the second transition zone 102 with a height of 50 mm and a thickness that changes non-linearly, the second equal thickness zone 104 with a height of 700 mm and a thickness of 1.2 mm, the first transition zone 101 with a height of 50 mm and a thickness that changes nonlinearly, and the first equal thickness zone 103 with a height of 1000 mm and a thickness of 0.8 mm.
(2) Adopting a mode that a round roller rolls with variable gap to perform variable material thickness rolling on aluminum alloy coiled material. Defining the target thickness of the area to be rolled of the aluminum alloy coiled material to be C. During the rolling process, adjusting the roller gap spacing of the round roller B timely to make it meet B=(88% - 90%)*C. At the same time, a feed side of the roller and a discharge side of the roller are respectively provided with a coiler to reversely curl the plate, and the motor curling force on both sides of the roller is the same. In addition, during the rolling process, lubricating liquid mixed with kerosene and plant oil is sprayed at the contact point between the roller and the plate (the volume ratio of kerosene and plant oil is 1:1). The plate is rolled into shape in one pass. A thickness gauge is provided at the exit of the roll gap, and a code reader is provided behind the thickness gauge to measure the rolling length of the plate, and the thickness tolerance of the plate is controlled to be ±0.1 mm.
(3) Coiling the completed rolled aluminum alloy equal thickness plate. The inner diameter of the coil material is 250 mm, and the outer diameter of the coil material is 600 mm. The coils are stacked in a bell type annealing furnace in the form that the center of the circle of the coil materials are located on the same straight line along the height direction, heated to 350 °C within 1 hour, and preserved heat for 2 hours. Then, stopping heating, and opening the furnace hood to slowly cool the coil material to room temperature. Performing mechanical pre-treatment, chemical pre-treatment and anodizing to the annealed aluminum alloy equal thickness plate sequentially, and obtaining the aluminum alloy cargo compartment plate.
(4) The completed rolled aluminum alloy equal thickness plate is pressed by a molding machine to have a corrugated structure as shown in FIG. 3, and the single corrugation extends along the up and down direction.

### Embodiment 3

The steps are the same as those in Embodiment 1, except that in step (1), aluminum alloy coiled material of 3003-O state is selected as the rolling raw material.

### Embodiment 4

The steps are the same as those in Embodiment 1, except that in step (2), B=(85% - 87%)*C.

### Embodiment 5

The steps are the same as those in Embodiment 1, except that in step (2), B=(90% - 92%)*C.

### Embodiment 6

The steps are the same as those in Embodiment 1, except that in step (2), B=(93% - 95%)*C.

### Embodiment 7

The steps are the same as those in Embodiment 1, except that in step (2), the volume ratio of kerosene and plant oil is 1:2.

### Embodiment 8

The steps are the same as those in Embodiment 1, except that in step (2), the volume ratio of kerosene and plant oil is 1:3.

### Embodiment 9

The steps are the same as those in Embodiment 1, except that in step (2), the volume ratio of kerosene and plant oil is 1:4.

### Embodiment 10

The steps are the same as those in Embodiment 1, except that in step (2), the volume ratio of kerosene and plant oil is 1:5.

### Embodiment 11

The steps are the same as those in Embodiment 1, except that in step (2), kerosene is sprayed as a lubricating liquid at the contact point between the roller and the plate.

### Embodiment 12

The steps are the same as those in Embodiment 1, except that in step (3), the aluminum alloy equal thickness plate is heated to 250 °C within 2 hours in a bell type annealing furnace and preserved heat for 6 hours.

### Embodiment 13

The steps are the same as in Embodiment 1, except that in step (3), the aluminum alloy equal thickness plate is heated to 300 °C within 2 hours in a bell type annealing furnace and preserved heat for 5 hours.

### Embodiment 14

The steps are the same as those in Embodiment 1, except that in step (3), the aluminum alloy equal thickness plate is heated to 350 °C within 1.5 hours in a bell type annealing furnace and preserved heat for 4 hours.

### Embodiment 15

The steps are the same as those in Embodiment 1, except that in step (3), the aluminum alloy equal thickness plate is heated to 400 °C within 1 hour in a bell type annealing furnace and preserved heat for 3 hours.

### Embodiment 16

The steps are the same as those in Embodiment 1, except that in step (3), the aluminum alloy equal thickness plate is heated to 450 °C within 1 hour in a bell type annealing furnace and preserved heat for 2 hours.

### Embodiment 17

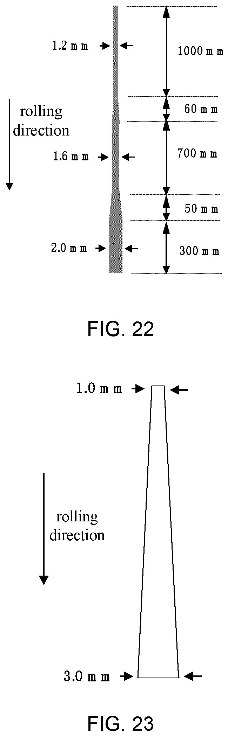

(1) The cross-sectional structure design of the aluminum alloy unequal thickness plate along the rolling direction is shown in FIG. 22 and FIG. 23. There is only one transition zone and no equal thickness zone. The thickness of the transition zone is 3 mm at its thickest point and 1 mm at its thinnest point. The thickness of the transition zone changes linearly.
(2) Selecting an AA3003 aluminum alloy equal thickness plate with a width of 600 mm and a thickness of 3.3 mm as the rolling initial state plate. Adopting a mode that a round roller rolls with variable gap to perform variable thickness rolling on aluminum alloy equal thickness plate. Defining the target thickness of the area to be rolled of the aluminum alloy equal thickness plate to be C. During the rolling process, adjusting the roller gap spacing of the round roller B timely so that it meets B=(87% - 90%)*C, and the rolling pressure is 485 t. At the same time, a feed side of the roller and a discharge side of the roller are respectively provided with a coiler to reversely curl the plate, the motor curling force on both sides of the roller is the same, and the curling tension is 10 MPa. In addition, during the rolling process, lubricating liquid mixed with kerosene and plant oil is sprayed at the contact point between the roller and the plate (the volume ratio of kerosene and plant oil is 1:1). The plate is rolled into shape in one pass. A thickness gauge is provided at the exit of the roll gap, and a code reader is provided behind the thickness gauge to measure the rolling length of the plate, and the thickness tolerance of the plate is controlled to be ±0.05 mm.
(3) Coiling the completed rolled aluminum alloy plate. The inner diameter of the coil material is 200 mm and the outer diameter of the coil material is 800 mm. The coils are stacked in a bell type annealing furnace in the form that the center of the circle of the coil materials are located on the same straight line along the height direction. The annealing process is preserving heat at 260 °C for 3 hours. Specifically, the coil material is heated in a stepwise heating mode. First, the furnace temperature is set to 300 °C. After the surface temperature of the coil material rises to 200 °C, changing the furnace temperature to 270 °C. When the surface temperature of the coil material rises to 240 °C, changing the furnace temperature to 260 °C. After all parts of the coil material are heated to 260 °C, preserving heat at this temperature for 3 hours. After the heat preservation is completed, stopping heating, and opening the furnace hood to slowly cool the coil material to room temperature, thus the annealing treatment is completed.
(4) Performing uncoiling, cutting and straightening treatment of the annealed coil material to obtain an aluminum alloy unequal thickness plate. Then, performing mechanical pre-treatment and surface treatment in sequence, and obtaining the aluminum alloy plate.

The above are only some embodiments of the present application, and are not intended to limit the scope of the present application. Under the concept of the present application, any equivalent structure transformation made by using the description and accompanying drawings of the present application, or directly or indirectly applied in other related technical fields, is included within the scope of the present application.

## Claims

1. An aluminum alloy cargo compartment plate, **characterized in that** the aluminum alloy cargo compartment plate is configured to enclose and form a cargo compartment, and a thickness of the aluminum alloy cargo compartment plate is configured to change gradually and form a variable cross-section structure in an up and down direction of the cargo compartment.

2. The aluminum alloy cargo compartment plate according to claim 1, wherein the aluminum alloy cargo compartment plate is made of an aluminum alloy equal thickness plate as raw materials, and is rolled into an aluminum alloy variable-thickness plate by adopting a round roller with variable gap in one pass.

3. The aluminum alloy cargo compartment plate according to claim 1, wherein the aluminum alloy cargo compartment plate is pressed into a corrugated structure.

4. The aluminum alloy cargo compartment plate according to claim 3, wherein a single corrugation in the corrugated structure is configured to extend along an up and down direction.

5. The aluminum alloy cargo compartment plate according to claim 1, wherein the thickness of the aluminum alloy cargo compartment plate is configured to decrease gradually in a direction from lower to upper of the cargo compartment.

6. The aluminum alloy cargo compartment plate according to claim 5, wherein the aluminum alloy cargo compartment plate is provided with at least one transition zone extending along an up and down direction, and a thickness of the aluminum alloy cargo compartment plate in the transition zone is configured to change continuously.

7. The aluminum alloy cargo compartment plate according to claim 6, wherein the transition zone comprises a linear transition zone with a linear change in thickness and/or a curvilinear transition zone with a non-linear change in thickness.

8. The aluminum alloy cargo compartment plate according to claim 6, wherein the aluminum alloy cargo compartment plate is further provided with at least one equal thickness zone extending along the up and down direction, the equal thickness zone is adjacent to the transition zone, and a thickness of a connection between the equal thickness zone and the transition zone is consistent.

9. The aluminum alloy cargo compartment plate according to claim 8, wherein the aluminum alloy cargo compartment plate is provided with a plurality of the transition zones and a plurality of the equal thickness zones, and the plurality of transition zones and the plurality of equal thickness zones are provided alternately.

10. The aluminum alloy cargo compartment plate according to claim 5, wherein a maximum thickness of the aluminum alloy cargo compartment plate is E1, a minimum thickness of the aluminum alloy cargo compartment plate is E2, and E1/E2≤3.

11. The aluminum alloy cargo compartment plate according to claim 6, wherein an aluminum alloy plate is provided with at least one transition zone in a rolling direction, and the thickness of the transition zone is configured to change continuously along the rolling direction; wherein the transition zone is provided with a first end and a second end provided opposite to the first end in the rolling direction, a thickness of the transition zone at the first end is A1, a thickness of the transition zone at the second end is A2, a length of the transition zone along the rolling direction is D, a difference between A1 and A2 is defined as A3, and D≥100*A3.

12. A lightweight variable cross-section carriage, provided with at least a bottom panel and two side panels, **characterized in that** the two side panels are respectively provided on a left side of the bottom panel and a right side of the bottom panel, the two side panels are variable cross-section structures, and a thickness of a bottom part of the side panel is greater than a thickness of a top part of the side panel.

13. The lightweight variable cross-section carriage according to claim 12, wherein a thickness of the side panel is configured to gradually decrease from a bottom part of the side panel toward a top part of the side panel.

14. The lightweight variable cross-section carriage according to claim 12, wherein the bottom panel is a variable cross-section structure, and a thickness of a middle part of the bottom panel is greater than a thickness of the left side of the bottom panel and a thickness of the right side of the bottom panel.

15. The lightweight variable cross-section carriage according to claim 14, wherein a thickness of the bottom panel is configured to gradually decrease from a middle part of the bottom panel toward the left side of the bottom panel and the right side of the bottom panel.

16. The lightweight variable cross-section carriage according to claim 14, wherein a lower surface of the bottom panel is provided with a plurality of cross beams, and a thickness of the cross beam is configured to gradually decrease from a middle part of the cross beam toward a left end of the cross beam and a right end of the cross beam.

17. The lightweight variable cross-section carriage according to claim 16, wherein the lower surface of the bottom panel is further provided with a plurality of longitudinal beams, and each longitudinal beam is provided with a plurality of lightening holes distributed along a length direction of the longitudinal beam.

18. The lightweight variable cross-section carriage according to claim 12, further comprising: a roof panel, wherein a thickness of a left side of the roof panel and a thickness of a right side of the roof panel are greater than a thickness of a middle part of the roof panel.

19. The lightweight variable cross-section carriage according to claim 18, wherein a thickness of the roof panel is configured to gradually decrease from a left side of the roof panel and a right side of the roof panel toward a middle part of the roof panel.

20. The lightweight variable cross-section carriage according to claim 12, further comprising a front panel, wherein a thickness of a bottom part of the front panel is greater than a thickness of a top part of the front panel.

21. The lightweight variable cross-section carriage according to claim 20, wherein a thickness of the front panel is configured to gradually decrease from a bottom part of the front panel toward a top part of the front panel.

22. The lightweight variable cross-section carriage according to claim 12, further comprising a rear panel, wherein a thickness of a bottom part of the rear panel is greater than a thickness of a top part of the rear panel.

23. The lightweight variable cross-section carriage according to claim 22, wherein a thickness of the rear panel is configured to gradually decrease from a bottom part of the rear panel toward a top part of the rear panel.

24. An aluminum alloy cargo compartment, **characterized by** comprising a cargo compartment side panel, wherein the cargo compartment side panel comprises the aluminum alloy cargo compartment plate according to any one of claims 1 to 10.

25. The aluminum alloy cargo compartment according to claim 24, further comprising a plurality of upright columns extending along an up and down direction, wherein the upright column is fixedly connected to an inner surface of an aluminum alloy cargo compartment side panel.

26. The aluminum alloy cargo compartment according to claim 25, further comprising a protective plate, wherein the protective plate is detachably provided at the upright column.

27. A truck, **characterized by** comprising the aluminum alloy cargo compartment according to any one of claims 11 to 13 or the aluminum alloy cargo compartment according to any one of claims 24 to 26.

28. A preparation method of an aluminum alloy cargo compartment plate, **characterized in that**, the aluminum alloy cargo compartment plate is configured to enclose and form a cargo compartment, and a thickness of the aluminum alloy cargo compartment plate is configured to change gradually in an up and down direction of the cargo compartment; the preparation method of the aluminum alloy cargo compartment plate comprises following steps:
selecting an aluminum alloy equal thickness plate as raw materials, adopting a mode that a round roller rolls with variable gap to roll the aluminum alloy equal thickness plate into shape in one pass, and obtaining an aluminum alloy variable-thickness plate; and
performing annealing, mechanical pre-treatment, chemical pre-treatment and anodizing to the aluminum alloy variable-thickness plate sequentially, and obtaining an aluminum alloy cargo compartment plate with variable material thickness.

29. The preparation method of the aluminum alloy cargo compartment plate according to claim 28, wherein materials of the aluminum alloy equal thickness plate is aluminum alloy of 3XXX series or aluminum alloy of 5XXX series.

30. The preparation method of the aluminum alloy cargo compartment plate according to claim 28, wherein materials of the aluminum alloy equal thickness plate is aluminum alloy of AA5754-O state.

31. The preparation method of the aluminum alloy cargo compartment plate according to claim 28, wherein in the adopting the mode that the round roller rolls with variable gap to roll the aluminum alloy equal thickness plate into shape in one pass:
a roll gap spacing of the round roller is B, and a target thickness of a rolling area of the aluminum alloy equal thickness plate is C, and B=(85% - 95%)*C.

32. The preparation method of the aluminum alloy plate according to claim 28, wherein in the adopting the mode that the round roller rolls with variable gap to roll the aluminum alloy equal thickness plate into shape in one pass:
a feed side of the round roller and a discharge side of the round roller are both provided with a coiler to simultaneously coil the aluminum alloy equal thickness plate during rolling in a reverse direction, wherein an applied curling tension is F1, a yield strength of the aluminum alloy equal thickness plate is F2, and F1≤30%*F2.

33. The preparation method of the aluminum alloy plate according to claim 28, wherein in the adopting the mode that the round roller rolls with variable gap to roll the aluminum alloy equal thickness plate into shape in one pass, defining a rolling pressure as F, a unit of the rolling pressure as t; defining a width of the aluminum alloy equal thickness plate as H, a unit of the width of the aluminum alloy equal thickness plate as mm; defining a yield strength of the aluminum alloy equal thickness plate is δ0.2, a unit of the yield strength of the aluminum alloy equal thickness plate is MPa; defining a difference between a thickness of the aluminum alloy equal thickness plate and a minimum target thickness of the aluminum alloy unequal thickness plate is Δd, and a unit of the difference between the thickness of the aluminum alloy equal thickness plate and the minimum target thickness of the aluminum alloy unequal thickness plate is mm; then, H≤900 mm and F=K*H*Δd*δ0.2, and K=0.005 t/MPa*mm2 - 0.015 t/MPa*mm2.

34. The preparation method of the aluminum alloy cargo compartment plate according to claim 28, wherein in the adopting the mode that the round roller rolls with variable gap to roll the aluminum alloy equal thickness plate into shape in one pass:
spraying lubricating liquid at a contact point between the round roller and the aluminum alloy equal thickness plate.

35. The preparation method of the aluminum alloy cargo compartment plate according to claim 34, wherein the lubricating liquid comprises kerosene and plant oil, and a volume ratio of the kerosene and the plant oil is 1:0 to 1:5.

36. The preparation method of the aluminum alloy cargo compartment plate according to claim 28, wherein the performing annealing to the aluminum alloy variable-thickness plate comprises:
placing the aluminum alloy variable-thickness plate in a bell type annealing furnace, raising temperature to 240 °C ~ 320 °C within 2 hours, preserving heat for 2 hours ~ 6 hours, and then stopping heating to allow the aluminum alloy variable-thickness plate to cool naturally in the bell type annealing furnace.

37. The preparation method of the aluminum alloy cargo compartment plate according to claim 28, wherein after the placing the aluminum alloy unequal thickness plate in the bell type annealing furnace, raising temperature to 240 °C ~ 320 °C in a stepwise heating mode and preserving heat for 2 hours ~ 6 hours, the method further comprises:
performing aging treatment to the aluminum alloy unequal thickness plate, aging temperature of the aging treatment is 120 °C ~ 210 °C, and aging time of the aging treatment is 0.5 hours ~ 16 hours.

38. The preparation method of the aluminum alloy cargo compartment plate according to claim 28, wherein after the performing annealing, mechanical pre-treatment, chemical pre-treatment and anodizing to the aluminum alloy variable-thickness plate sequentially, and obtaining the aluminum alloy cargo compartment plate with variable material thickness, the method further comprises:
the aluminum alloy cargo compartment plate is pressed to have a corrugated structure, and a single corrugation in the corrugated structure is configured to extend along an up and down direction.
